# EUROPÄISCHE PATENTSCHRIFT

(11) **EP 1 871 125 B1**
(45) Veröffentlichungstag und Bekanntmachung des Hinweises auf die Patenterteilung: **23.10.2013**
(21) Anmeldenummer: 06012659.6
(22) Anmeldetag: 20.06.2006
(51) Int. Cl.: H04W 72/04, H04W 24/10, H04W 72/08

(54) **Effiziente Funkressourcenverwaltung in einem Mobilfunkkommunikationssystem**
Efficient radio resource management in a mobile communication system
Gestion efficient des ressources radio dans un système de radio mobile

(43) Veröffentlichungstag der Anmeldung: 26.12.2007
(73) Patentinhaber: Nokia Siemens Networks GmbH & Co. KG, 81541 München (DE)
(72) Erfinder: Breuer,Volker, 16727 Bötzow (DE); Ulrich, Thomas, 67098 Bad Dürkheim (DE)

(56) Entgegenhaltungen:
- DE-A1- 10 338 053
- "3GPP TR 25.814 V1.2.0" INTERNET CITATION, [Online] Februar 2006 (2006-02), XP002400401 Gefunden im Internet: URL:http://www.3gpp.org/ftp/Specs/html-inf o/25814.htm> [gefunden am 2006-09-26]

## Beschreibung

Die Erfindung betrifft ein Verfahren zum Betreiben eines Funkkommunikationssystems, bei welchem zur Kommunikation zwischen netzseitigen Funkstationen und Teilnehmerstationen ein in eine Mehrzahl von Subbändern aufgeteiltes Frequenzband verwendet wird.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Derzeitige Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen existieren drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

Um eine möglichst effiziente Übertragung von Daten zu erreichen, kann man das gesamte zur Verfügung stehende Frequenzband in mehrere Subbänder (Multicarrier- bzw. Mehrträgerverfahren) zerlegen. Die den Mehrträgersystemen zugrunde liegende Idee ist es, das Ausgangsproblem der Übertragung eines breitbandigen Signals in die Übertragung mehrerer schmalbandiger Signale zu überführen. Dies hat unter anderem den Vorteil, dass die am Empfänger erforderliche Komplexität reduziert werden kann. Ferner ermöglicht die Aufteilung der verfügbaren Bandbreite in mehrere schmalbandige Subbänder eine deutlich höhere Granularität der Datenübertragung hinsichtlich der Verteilung der zu übertragenden Daten auf die unterschiedlichen Subbänder, d.h. die Funkressourcen können mit einer großen Feinheit auf die zu übertragenden Daten bzw. auf die Teilnehmerstationen verteilt werden. Ein Beispiel für ein Mehrträgerübertragungsverfahren ist OFDM (Orthogonal Frequency Division Multiplexing), bei welchem für die Subbänder zeitlich annähernd rechteckige Pulsformen verwendet werden. Der Frequenzabstand der Subbänder wird derart gewählt, dass im Frequenzraum bei derjenigen Frequenz, bei welcher das Signal eines Subbands ausgewertet wird, die Signale der anderen Subbänder einen Nulldurchgang aufweisen. Somit sind die Subbänder orthogonal zueinander.

Das Dokument DE 103 38 053 A1 offenbart ein Verfahren zum Betreiben eines Funkkommunikationssystem unter Verwendung einer Mehrzahl von Subbändern.

Der Erfindung liegt die Aufgabe zugrunde, ein effizientes Verfahren zum Betreiben eines Mehrträger-Funkkommunikationssystems aufzuzeigen, sowie eine zur Durchführung des Verfahrens geeignete netzseitige Funkstation.

Diese Aufgabe wird durch ein Verfahren mit den Merkmalen des Anspruchs 1, sowie durch eine Vorrichtung mit Merkmalen eines nebengeordneten Anspruchs gelöst. Vorteilhafte Ausgestaltungen und Weiterbildungen sind Gegenstand von Unteransprüchen.

Bei dem erfindungsgemäßen Verfahren zum Betreiben eines Funkkommunikationssystems wird zur Kommunikation zwischen netzseitigen Funkstationen und Teilnehmerstationen ein in eine Mehrzahl von Subbändern aufgeteiltes Frequenzband verwendet. Eine erste netzseitige Funkstation empfängt von einer zweiten netzseitigen Funkstation erste Informationen, welche von der zweiten netzseitigen Funkstation für zumindest manche der Subbänder verwendete Sendeleistungen betreffen. Weiterhin empfängt die erste netzseitige Funkstation von einer Teilnehmerstation zweite Informationen, welche eine Empfangsstärke der Teilnehmerstation von zumindest einem von der zweiten netzseitigen Funkstation auf einem Subband ausgestrahlten Signal betreffen.

Die erste netzseitige Funkstation empfängt die ersten Informationen von der zweiten netzseitigen Funkstation. Bei den ersten Informationen handelt es sich um ein Sendeleistungsspektrum. Dieses Sendeleistungsspektrum kann sich über das gesamte Frequenzband oder nur über einen Ausschnitt des gesamten Frequenzbandes erstrecken; es kann auch lediglich die Sendeleistungen von vereinzelten Subbändern des gesamten Frequenzbandes angeben. Die Übertragung der ersten Informationen von der zweiten netzseitigen Funkstation zu der ersten netzseitigen Funkstation erfolgt über eine Verbindung, welche über Leitung oder Funk realisiert sein kann; vorzugsweise handelt es sich um eine direkte Verbindung, welche nicht über weiterleitende oder Nachrichten verarbeitende Einrichtungen verläuft.

Die erste netzseitige Funkstation empfängt die zweiten Informationen von der Teilnehmerstation. Die Übertragung der zweiten Informationen von der Teilnehmerstation zu der ersten netzseitigen Funkstation erfolgt über eine Funkverbindung. Die zweiten Informationen betreffen eine Stärke, mit welcher die Teilnehmerstation ein Signal der zweiten netzseitigen Funkstation empfängt. Es können durch die zweiten Informationen Empfangsstärken mehrerer Signale, welche jeweils von der zweiten netzseitigen Funkstation auf einem Subband ausgestrahlt werden, angegeben werden. Bei dem oder den Signalen der zweiten netzseitigen Funkstation handelt es sich vorzugsweise um Pilotsignale, welche zumindest auch zum Zwecke der teilnehmerstationsseitigen Empfangsstärkemessungen ausgestrahlt werden.

Der Empfang der ersten und der zweiten Informationen durch die erste netzseitige Funkstation erfolgt vorzugsweise, während die Teilnehmerstation mit der ersten netzseitigen Funkstation kommuniziert.

In Weiterbildung der Erfindung fordert die erste netzseitige Funkstation die ersten Informationen von der zweiten netzseitigen Funkstation und/oder die zweiten Informationen von der Teilnehmerstation an. Eine Anforderungsnachricht kann hierbei jeweils die angeforderten Informationen spezifizieren, indem z.B. Subbänder und/oder Zeitpunkte angegeben werden, auf welche sich die angeforderten ersten und/oder zweiten Informationen beziehen sollen.

Mit Vorzug beziehen sich die ersten Informationen und die zweiten Informationen zumindest teilweise auf die gleichen Subbänder. Möglich ist es z.B., dass die Subbänder der zweiten Informationen eine Teilmenge der Subbänder der ersten Informationen darstellen. Letzteres bedeutet, dass der ersten netzseitigen Funkstation für alle Subbänder, betreffend welche sie von der Teilnehmerstation über die Empfangsstärke informiert wird, eine jeweilige Information betreffend die Sendestärke von der zweiten netzseitigen Funkstation vorliegt.

In Ausgestaltung der Erfindung betreffend die ersten Informationen weiterhin eine Auslastung der zweiten netzseitigen Funkstation. Die Signalisierung der Auslastung der zweiten netzseitigen Funkstation an die erste netzseitige Funkstation kann explizit erfolgen, indem die zweite netzseitige Funkstation eine ihre Auslastung angebende Größe überträgt, oder implizit, indem die ersten Informationen betreffend die Sendeleistungen so ausgestaltet sind, dass die erste netzseitige Funkstation eine Auslastung der zweiten netzseitigen Funkstation daraus ermitteln kann. Die Informationen betreffend die Auslastung und die Informationen betreffend die Sendeleistung können in einer gemeinsamen Nachricht oder durch getrennte Nachrichten übertragen werden.

Weiterhin ist es möglich, dass die ersten Informationen weiterhin von der zweiten netzseitigen Funkstation zur Ausstrahlung des mindestens einen Signals verwendete Funkressourcen betreffen. Diese Informationen betreffend die Funkressourcen und die Informationen betreffend die Sendeleistung, sowie gegebenenfalls auch die Informationen betreffend die Auslastung der zweiten netzseitigen Funkstation, können in einer gemeinsamen Nachricht oder durch getrennte Nachrichten übertragen werden. Die erste netzseitige Funkstation kann die von der zweiten netzseitigen Funkstation übermittelten Informationen betreffend die Funkressourcen dazu verwenden, der Teilnehmerstation mitzuteilen, auf welchen Funkressourcen die von ihr hinsichtlich der Empfangsstärke zu vermessenden Signale übertragen werden.

In Weiterbildung der Erfindung bestimmt die erste netzseitige Funkstation aus den ersten und den zweiten Informationen eine Funkkanalqualität von zumindest einem Funkkanal zwischen der Teilnehmerstation und der zweiten netzseitigen Funkstation. Die Funkkanalqualität bezieht sich hierbei vorzugsweise auf das zumindest eine Subband, auf welches sich die Empfangsstärke der zweiten Informationen bezieht. Zusätzlich oder alternativ ist es möglich, dass sich die Funkkanalqualität auf zumindest ein Subband bezieht, auf welches sich die Empfangsstärke der zweiten Informationen nicht bezieht; die erste netzseitige Funkstation kann somit Informationen über die Funkkanalqualität von Subbändern gewinnen, für welche die Teilnehmerstation ihr keine Informationen betreffend die Empfangsstärke von Signalen der zweiten netzseitigen Funkstation zur Verfügung stellt.

Einer bevorzugten Weiterbildung der Erfindung gemäß berücksichtigt die erste netzseitige Funkstation die ersten und die zweiten Informationen bei einer Entscheidung betreffend eine Funkressourcenzuweisung an die Teilnehmerstation. Diese Zuweisung erfolgt für eine Kommunikation zwischen der ersten netzseitigen Funkstation und der Teilnehmerstation. Es kann hierbei berücksichtigt werden, dass Subbänder mit geringer Interferenz hervorgerufen durch eine Kommunikation der zweiten netzseitigen Funkstation zugewiesen werden.

In Ausgestaltung der Erfindung berücksichtigt die erste netzseitige Funkstation die ersten und die zweiten Informationen bei einer Entscheidung betreffend ein Handover der Teilnehmerstation von der ersten zu der zweiten netzseitigen Funkstation. Hierbei kann es sich um eine abschließende Entscheidung über die Durchführung eines Handovers handeln, welche die erste netzseitige Funkstation trifft. Es kann sich jedoch auch um eine Entscheidung der ersten netzseitigen Funkstation handeln, die zweite netzseitige Funkstation über eine eventuelle Durchführung eines Handovers zu befragen.

In Weiterbildung der Erfindung beziehen sich die ersten Informationen und/oder die zweiten Informationen auf eine Mehrzahl von Zeitpunkten. Insbesondere können sich die ersten Informationen und/oder die zweiten Informationen auf periodisch wiederkehrende Zeitpunkte beziehen. Die Versendung der ersten und/oder zweiten Informationen kann in einzelnen Nachrichten erfolgen, welche Sendeleistungsinformationen bzw. Empfangsstärkeinformationen von lediglich einem Zeitpunkt enthalten, oder in einer Nachricht, welche mehrere Sets von Sendeleistungsinformationen bzw. Empfangsstärkeinformationen, korrespondierend zu mehreren Zeitpunkten, beinhaltet.

Besonders vorteilhaft ist es, wenn die ersten Informationen und/oder die zweiten Informationen unter Verwendung eines Bildkompressionsverfahrens bearbeitet sind. Diese Bearbeitung findet durch den Sender, d.h. durch die zweite netzseitige Funkstation oder durch die Teilnehmerstation statt. Die erste netzseitige Funkstation kann nach dem Empfang der ersten und/oder der zweiten Informationen das entsprechende Dekompressionsverfahren anwenden. Die Verwendung eines Bildkompressionsverfahrens hat den Vorteil der Einsparung von Übertragungsressourcen.

Die ersten Informationen und/oder die zweiten Informationen können auch unter Verwendung eines Kompressionsverfahrens bearbeitet sein, bei welchem Stützstellen und zumindest eine einen Kurvenverlauf zwischen den Stützstellen beschreibende Größe eingesetzt werden. Bei den Stützstellen handelt es sich hierbei um bestimmte Subbänder. In Bezug auf die ersten Informationen beschreibt die zumindest eine den Kurvenverlauf beschreibende Größe den Verlauf der Sendeleistung aufgetragen gegen die Subbänder, in Bezug auf die zweiten Informationen beschreibt die zumindest eine den Kurvenverlauf beschreibende Größe den Verlauf der Empfangsstärke aufgetragen gegen die Subbänder.

Die erfindungsgemäße netzseitige Funkstation weist Mittel auf zum Kommunizieren mit Teilnehmerstationen unter Verwendung eines in eine Mehrzahl von Subbändern aufgeteilten Frequenzbandes. Weiterhin umfasst sie Mittel zum Empfangen und Verarbeiten von ersten Informationen von einer anderen netzseitigen Funkstation, welche von der anderen netzseitigen Funkstation für zumindest manche der Subbänder verwendete Sendeleistungen betreffen, sowie Mittel zum Empfangen und Verarbeiten von zweiten Informationen von einer Teilnehmerstation, welche eine Empfangsstärke der Teilnehmerstation von zumindest einem von der anderen netzseitigen Funkstation auf einem Subband ausgestrahlten Signal betreffen.

Die erfindungsgemäße netzseitige Funkstation eignet sich insbesondere zur Durchführung des erfindungsgemäßen Verfahrens, wobei dies auch auf die Ausgestaltungen und Weiterbildungen zutreffen kann. Hierzu kann sie weitere geeignete Mittel umfassen.

Im folgenden wird die Erfindung anhand eines Ausführungsbeispiels näher erläutert. Dabei zeigen:
- Figur 1:: einen Ausschnitt aus einem Mobilfunkkommunikationssystem,
- Figur 2:: ein Ablaufschema,
- Figur 3A:: ein Sendeleistungsspektrum,
- Figur 3B:: ein Empfangsleistungsspektrum.

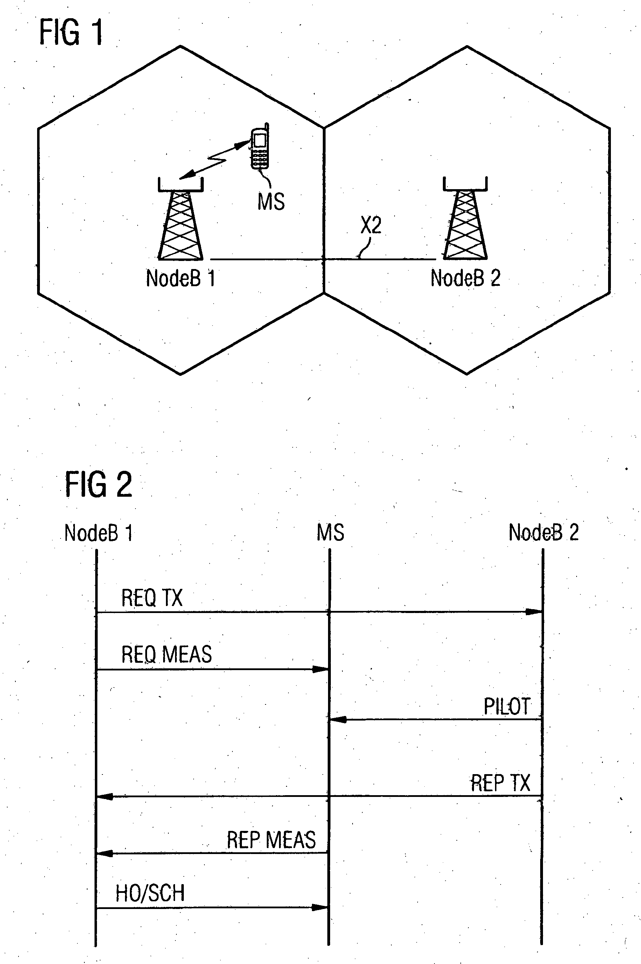

Der in Figur 1 dargestellte Ausschnitt aus einem Mobilfunkkommunikationssystem zeigt die Funkzellen der beiden benachbarten netzseitigen Funkstationen NodeB 1 und NodeB 2. Über eine mit X2 bezeichnete Schnittstelle können die beiden netzseitigen Funkstationen NodeB 1 und NodeB 2 miteinander kommunizieren. Die Schnittstelle x2 wird vorzugsweise über eine Leitung realisiert; ferner handelt es sich vorzugsweise um eine direkte Verbindung, d.h. eine Verbindung ohne Zwischenschaltung eines Servers oder einer vermittelnden Einrichtung. In der Funkzelle der netzseitigen Funkstation NodeB 1 befindet sich die Teilnehmerstation MS. Weitere netzseitige Einrichtungen und Teilnehmerstationen des Mobilfunkkommunikationssystems sind aus Gründen der Übersichtlichkeit nicht in Figur 1 dargestellt. Bei dem betrachteten Mobilfunkkommunikationssystem kann es sich z.B. um ein System gemäß einer Weiterentwicklung von UMTS, als LTE (Long Term Evolution) bezeichnet, handeln.

Die Teilnehmerstation MS kommuniziert aktuell mit der netzseitigen Funkstation NodeB 1. Hierbei kann es sich um eine Kommunikation in Abwärtsrichtung, d.h. um Nachrichtenversendungen von der netzseitigen Funkstation NodeB 1 zu der Teilnehmerstation MS, und/oder um eine Kommunikation in Aufwärtsrichtung, d.h. um Nachrichtenversendungen von der Teilnehmerstation MS zu der netzseitigen Funkstation NodeB 1, handeln. In dem betrachteten System stehe zur Kommunikation zwischen Teilnehmerstationen und netzseitigen Funkstationen ein breites Frequenzband zur Verfügung, welches in eine Vielzahl von Subbändern aufgeteilt ist. Dementsprechend wird eine Mehrträgertechnologie wie z.B. OFDM eingesetzt. Die Kommunikation zwischen der netzseitigen Funkstation NodeB 1 und der Teilnehmerstation MS kann auf manchen oder allen Subbändern des Frequenzbandes erfolgen. Z.B. kann die Teilnehmerstation MS so ausgestaltet sein, dass sie lediglich auf einer begrenzten Bandbreite Signale empfangen kann, wobei diese Bandbreite deutlich kleiner ist als die Breite des gesamten Frequenzbandes; die Teilnehmerstation MS kann zu einem Zeitpunkt in diesem Fall lediglich einen Ausschnitt der im System verfügbaren Bandbreite nutzen.

Da aktuell die netzseitige Funkstation NodeB 1 für die Teilnehmerstation MS verantwortlich ist, sorgt die netzseitige Funkstation NodeB 1 für eine geeignete Funkressourcenversorgung der Teilnehmerstation MS, wie im folgenden anhand des Ablaufschemas der Figur 2 dargestellt wird. Dieses Ablaufschema zeigt einen Nachrichtenaustausch zwischen den netzseitigen Funkstationen NodeB 1 und NodeB 2, sowie einen Nachrichtenaustausch zwischen der netzseitigen Funkstation NodeB 1 und der Teilnehmerstation MS. Im folgenden wird zuerst der Nachrichtenaustausch zwischen den netzseitigen Funkstationen NodeB 1 und NodeB 2 erläutert.

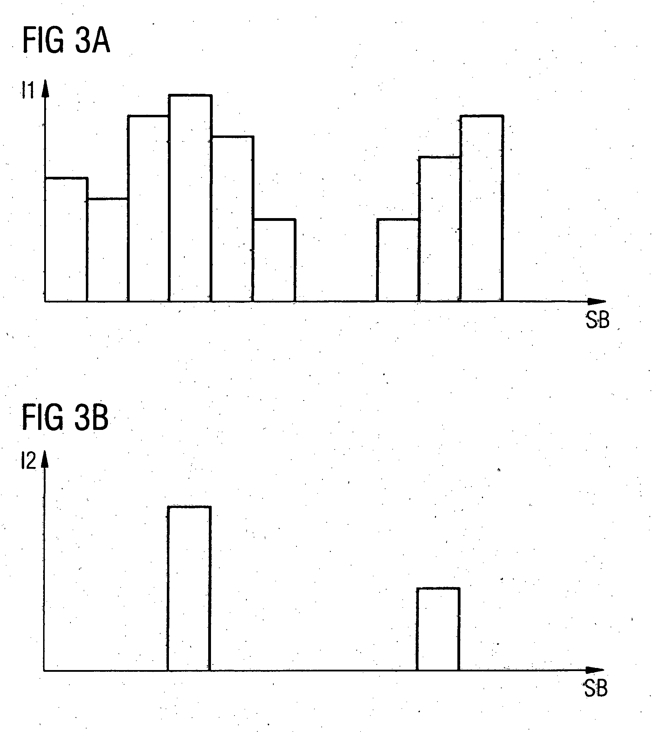

Die netzseitige Funkstation NodeB 1 sendet eine Anforderungsnachricht REQ TX an die netzseitige Funkstation NodeB 2 mit der Aufforderung, ihr Informationen betreffend die Funkkommunikation der netzseitigen Funkstation NodeB 2 mitzuteilen. Hierbei handelt es sich um die folgenden Informationen:
- Die von der netzseitigen Funkstation NodeB 2 verwendeten Sendeleistungen für die Subbänder des Frequenzbandes. Ein solches Sendeleistungsspektrum ist in Figur 3A dargestellt. Nach oben ist hierbei die Sendeleistung I1 der netzseitigen Funkstation NodeB 2 und nach rechts sind die Subbänder SB aufgetragen. Beispielhaft werden in Figur 3A lediglich 11 Subbänder SB betrachtet. Reelle Systeme verwenden oftmals eine deutlich größere Anzahl an Subbändern. Die angefragten bzw. von der netzseitigen Funkstation NodeB 2 als Antwort zur Verfügung gestellten Sendeleistungswerte I1 können sich hierbei auf in eine bestimmte Abstrahlrichtung verwendete Sendeleistungen beziehen, vorzugsweise in Richtung der Position der Teilnehmerstation MS. Weiterhin kann sich die Anfrage der netzseitigen Funkstation NodeB 1 bzw. die Antwort der netzseitigen Funkstation NodeB 2 auf die Sendeleistungen I1 der netzseitigen Funkstation NodeB 2 von nur manchen der Subbänder des Frequenzbandes oder von Subbändern eines Ausschnitts des Frequenzbandes beziehen. Zusätzlich kann die Anforderungsnachricht REQ TX sich auf die folgenden Informationen beziehen:

- Eine die Auslastung der netzseitigen Funkstation NodeB 2 beschreibende Größe. Hierbei kann es sich z.B. um eine Angabe handeln, zu welchem Prozentsatz die der netzseitigen Funkstation NodeB 2 zur Verfügung stehenden Funkressourcen aktuell belegt sind, oder um die Sendeleistung, welche für bestimmte Kanäle wie Kanäle für Pilotsignale PILOT oder Broadcastkanäle, welche einen festen Bezug zur maximalen Sendeleistung aufweisen, eingesetzt wird.
- Die Angabe, auf welchen Subbändern und zu welchen Zeiten die netzseitige Funkstation NodeB 2 Pilotsignale PILOT ausstrahlt. Diese Information ist nicht nötig, wenn der netzseitigen Funkstation NodeB 1 die zeitliche und Frequenz- Lage der Pilotsignale PILOT der netzseitigen Funkstation NodeB 2 bekannt ist. Bei den Pilotsignalen PILOT handelt es sich um der Teilnehmerstation MS bekannte Signale, welche wie im folgenden beschrieben zur Durchführung von Messungen durch die Teilnehmerstation MS herangezogen werden können.

Mit der Antwortnachricht REP TX antwortet die netzseitige Funkstation NodeB 2 auf die Anfrage REQ TX der netzseitigen Funkstation NodeB 1, indem sie der netzseitigen Funkstation NodeB 1 die angefragten Informationen zur Verfügung stellt. Die Antwortnachricht REP TX der netzseitigen Funkstation NodeB 2 gibt somit zumindest das Sendeleistungsspektrum an, sowie gegebenenfalls Informationen betreffend die Auslastung und/oder betreffend die zur Ausstrahlung der Pilotsignale PILOT verwendeten Funkressourcen. Hierbei können sich die der netzseitigen Funkstation NodeB 1 von der netzseitigen Funkstation NodeB 2 zur Verfügung gestellten Angaben auf die aktuelle Situation beziehen, oder auch auf eine zukünftige, der netzseitigen Funkstation NodeB 2 bekannte oder von ihr prognostizierte. Z.B. kann die Antwort REP TX die Situation in wenigen ms in Bezug auf den Zeitpunkt der Ausstrahlung der Antwortnachricht REP TX betreffen.

Es ist den netzseitigen Funkstationen NodeB 1 und NodeB 2 bekannt, auf welchen Zeitpunkt sich die Informationen der Antwortnachricht REP TX beziehen. Dies kann realisiert werden, indem die Antwortnachricht REP TX diesen Zeitpunkt angibt, z.B. durch Bezugnahme auf ein Zeitraster. Zusätzlich oder alternativ kann die netzseitige Funkstation NodeB 1 der netzseitigen Funkstation NodeB 2 mit der Anforderungsnachricht REQ TX gegebenenfalls mitteilen, auf welchen Zeitpunkt sich die angeforderten Informationen beziehen sollen. Es ist möglich, dass die netzseitige Funkstation NodeB 1 durch die Anfrage REQ TX ein mehrmaliges Zur-Verfügung-Stellen der Informationen anfordert. So ist es beispielsweise möglich, dass die netzseitige Funkstation NodeB 2 die angefragten Antworten REP TX periodisch an die netzseitige Funkstation NodeB 1 versenden soll.

Während die Teilnehmerstation MS aktuell mit der netzseitigen Funkstation NodeB 1 kommuniziert, befindet sie sich in der Nähe der Funkzelle der netzseitigen Funkstation NodeB 2, so dass sie neben Signalen der netzseitigen Funkstation NodeB 1 auch Signale der netzseitigen Funkstation NodeB 2 empfangen kann. Dies kann zu unerwünschten Interferenzen und somit zu einer Beeinträchtigung der Kommunikation zwischen der netzseitigen Funkstation NodeB 1 und der Teilnehmerstation MS führen. Insbesondere kann die Teilnehmerstation MS auch die von der netzseitigen Funkstation NodeB 2 ausgestrahlte Pilotsignale PILOT empfangen und als solche erkennen. Mit der Anforderungsnachricht REQ MEAS fordert die netzseitige Funkstation NodeB 1 die Teilnehmerstation MS auf, Messungen der Empfangsstärke betreffend Pilotsignale PILOT der netzseitigen Funkstation NodeB 2 durchzuführen und der netzseitigen Funkstation NodeB 1 die Ergebnisse mitzuteilen. Hierbei kann die netzseitige Funkstation NodeB 1 in der Anforderungsnachricht REQ MEAS einen Frequenzbereich angeben, in welchem die Teilnehmerstation MS nach den Pilotsignalen der netzseitigen Funkstation NodeB 2 suchen soll. Alternativ können durch die Anforderungsnachricht REQ MEAS bestimmte Subbänder vorgegeben werden, auf welchen die netzseitige Funkstation NodeB 2 Pilotsignale PILOT ausstrahlt, welche von der Teilnehmerstation MS zu vermessen sind. Ein solches Subset von Subbändern kann aus gleichmäßig im Frequenzband verteilten Subbändern bestehen, so z.B. aus jedem zehnten Subband, oder es kann auf einen bestimmten Abschnitt des Frequenzbandes konzentriert sein. Letzteres ist z.B. vorteilhaft, wenn die netzseitige Funkstation NodeB 1 beabsichtigt, ihre Kommunikation mit der Teilnehmerstation MS in einem bestimmten Frequenzabschnitt fortzuführen und hierzu an der Höhe der Interferenz in diesem Frequenzabschnitt interessiert ist.

In der Anforderung REQ MEAS kann die netzseitige Funkstation NodeB 1 einen bestimmten Zeitpunkt angeben, zu welchem die Messungen der Teilnehmerstation MS durchgeführt werden sollen. Es können auch mehrere solcher Zeitpunkte angegeben werden. Insbesondere eine periodische Durchführung der Messungen ist vorteilhaft. Weiterhin ist es möglich, dass die Durchführung der Messungen von dem Eintritt eines bestimmten Ereignisses abhängig gemacht wird.

Die Teilnehmerstation MS antwortet auf die Anfrage REQ MEAS der netzseitigen Funkstation NodeB 1 mit einer oder mehreren Antwortnachrichten REP MEAS. Diese enthält bzw. enthalten Empfangsstärkewerte in Bezug auf diejenigen Subbänder, welche die netzseitige Funkstation NodeB 1 in der Anforderung REQ MEAS angegeben hat. Figur 3B zeigt ein solches Empfangsleistungsspektrum. Nach oben ist hierbei die Empfangsstärke 12 und nach rechts sind die Subbänder SB aufgetragen, wobei als konkretes Beispiel der Fall dargestellt ist, dass Messungen an lediglich zwei Subbändern SB durchgeführt wurden.

Fordert die netzseitige Funkstation NodeB 1 von der Teilnehmerstation MS die Durchführung von Messungen an einer Vielzahl von Subbändern an, so erfordert die Übertragung der Messergebnisse von der Teilnehmerstation MS zur netzseitigen Funkstation NodeB 1 einen großen Umfang an Funkressourcen. Es ist beispielsweise möglich, dass die netzseitige Funkstation NodeB 1 Messungen der Teilnehmerstation MS an allen Subbändern oder zumindest an allen Subbändern innerhalb eines Abschnittes des Frequenzbandes anfordert. Um Funkressourcen für diese Übertragung einzusparen, ist die Verwendung von Kompressionsverfahren für die die Messergebnisse enthaltenden Daten vorteilhaft.

Insbesondere aus dem Bereich der Bildkommpression bekannte Verfahren, wie die Komprimierungsstandards jpeg, gif, mpeg, bieten sich hierzu an. Hierbei kann sich die Frequenzauflösung auf die Breite eines Subbandes beschränken. Zu Zwecken der Komprimierung kann ausgenutzt werden, dass aufgrund der Kohärenzbreite benachbarte Subbänder ein ähnliches Verhalten aufzeigen. Eine weitere Möglichkeit zur Datenreduktion, d.h. zur Komprimierung der die Messergebnisse enthaltenden Daten, ist die Übermittlung von Messergebnissen lediglich für bestimmte Subbänder, die so genannten Stützstellen. Diese Stützstellen können fest sein, d.h. sie werden zuvor ausgewählt und sind der Funkstation NodeB 1 und der Teilnehmerstation MS bekannt. Alternativ kann die Lage der Stützstellen auch variabel sein, so dass sich die ausgewählten Stützstellen von einer Übermittlung von Messergebnissen zur nächsten Übermittlung von Messergebnissen unterscheiden können. Zusätzlich zu den Messergebnissen der Stützstellen werden weiterhin verlaufsbeschreibende Größen, betreffend den Verlauf der Messergebnisskurve aufgetragen gegen die Subbänder, übermittelt. Als verlaufsbeschreibende Größen bieten sich z.B. die erste und die zweite Ableitung an. Diese Formen der Datenreduktion kann als Spline-Interpolation (für fest vorgegebene Stützstellen) bzw. als Bezier-Kurven (für variable Stützstellen) bezeichnet werden.

Derartige Kompressionsverfahren können auch bei der Übertragung des Sendeleistungsspektrums von der netzseitigen Funkstation NodeB 2 an die netzseitige Funkstation NodeB 1 zum Einsatz kommen.

Die netzseitige Funkstation NodeB 1 empfängt somit von der netzseitigen Funkstation NodeB 2 ein Sendeleistungsspektrum, z.B. gemäß Figur 3A, und von der Teilnehmerstation MS ein Empfangsleistungsspektrum, z.B. gemäß Figur 3B. Hierbei ist der Zeitpunkt, zu welchem die netzseitige Funkstation NodeB 2 das der netzseitigen Funkstation NodeB 1 mit der Antwortnachricht REP TX mitgeteilte Sendeleistungsspektrum ausstrahlt, und der Zeitpunkt, zu welchem die Teilnehmerstation MS das der netzseitigen Funkstation NodeB 1 mit der Antwortnachricht REP MEAS mitgeteilte Empfangsleistungsspektrum empfängt, in etwa der gleiche. Dies kann durch geeignete Vorgaben der Zeitpunkte in den Anforderungsnachrichten REQ TX und REQ MEAS erreicht werden. Somit ist der netzseitigen Funkstation NodeB 1 in Bezug auf zumindest manche Pilotsignale PILOT der netzseitigen Funkstation NodeB 2 bekannt, mit welcher Sendeleistung I1 die netzseitige Funkstation NodeB 2 diese ausstrahlt und mit welcher Empfangsleistung 12 die Teilnehmerstation MS diese empfängt. Die netzseitige Funkstation NodeB 1 kann daher für diese Subbänder die Funkkanaldämpfung in Bezug auf die Funkkanäle zwischen der netzseitigen Funkstation NodeB 2 und der Teilnehmerstation MS berechnen. Wurden mehrere Nachrichten REP TX und/oder mehrere Nachrichten REP MEAS gesendet, so kann im Rahmen der Berechnung eine Mittelung durchgeführt werden.

Die netzseitige Funkstation NodeB 1 kann die Kanalimpulsantwort für diejenigen Subbänder, für welche die Teilnehmerstation MS keine Messungen durchgeführt hat, durch Berechnung bestimmen, wobei die ihr aufgrund der Messungen bekannten Funkkanaldämpfungen der die vermessenen Pilotsignale PILOT enthaltenden Subbänder als Stützstellen eingesetzt werden. Hierbei wird davon ausgegangen, dass die Kohärenzbreite größer als die Breite eines Subbandes ist, d.h. die Subbänder verhalten sich hinsichtlich ihrer Kanaldämpfung nicht unabhängig voneinander. Liegt beispielsweise ein Subband neben einem Subband mit starker Kanaldämpfung, so ist davon auszugehen, dass auch für dieses benachbarte Subband eine schlechte Funkkanalqualität vorhanden ist. Aus den Messungen der Teilnehmerstation MS in Bezug auf bestimmte Subbänder können auf diese Weise Rückschlüsse auf die Eigenschaften von Funkkanälen gezogen werden, in Bezug auf welche der netzseitigen Funkstation NodeB 1 keine Messergebnisse der Teilnehmerstation MS bekannt sind. Somit liegen der netzseitigen Funkstation NodeB 1 Informationen über die Funkkanalqualität zwischen der netzseitigen Funkstation NodeB 2 und der Teilnehmerstation im gesamten Frequenzband oder - abhängig davon, auf welchen Bereich des Frequenzbandes sich die Antwortnachrichten REP TX und REP MEAS beziehen - zumindest in einem Ausschnitt des Frequenzbandes vor.

Die von der netzseitigen Funkstation NodeB 1 gewonnenen Kenntnisse über die Funkkanäle zwischen der Teilnehmerstation MS und der netzseitigen Funkstation NodeB 2 können von der netzseitigen Funkstation NodeB 1 wie folgt eingesetzt werden:
- Es kann ein effizientes Scheduling, d.h. eine Funkressourcenzuweisung an die Teilnehmerstation MS für die Kommunikation zwischen der netzseitigen Funkstation NodeB 1 und der Teilnehmerstation MS, erfolgen. Hierbei kann berücksichtigt werden, dass Subbänder bzw. Frequenzbereiche, für welche eine gute Kanalqualität zwischen der Teilnehmerstation MS und der netzseitigen Funkstation NodeB 2 vorhanden ist, nicht für die Kommunikation zwischen der netzseitigen Funkstation NodeB 1 und der Teilnehmerstation MS eingesetzt werden und somit nicht der Teilnehmerstation MS zugewiesen werden sollten. Denn auf diesen Subbändern würde die Kommunikation zwischen der netzseitigen Funkstation NodeB 1 und der Teilnehmerstation MS eine starke Interferenz durch Nachrichtenversendungen innerhalb der Funkzelle der netzseitigen Funkstation NodeB 2 erfahren. Zur Steigerung der Übertragungsqualität weist die netzseitige Funkstation NodeB 1 der Teilnehmerstation MS somit Subbänder zu, in Bezug für welche eine schlechte Funkkanalqualität zwischen der Teilnehmerstation MS und der netzseitigen Funkstation NodeB 2 festgestellt wurde. Durch die Verminderung der Interferenz kann die Übertragungsrate bei der Kommunikation zwischen der Teilnehmerstation MS und der netzseitigen Funkstation NodeB 1 gesteigert werden, z.B. aufgrund einer niedrigeren Anzahl von nicht oder fehlerhaft empfangenen und somit erneut zu übertragenen Paketen. Dieses Vorgehen ist insbesondere relevant für Teilnehmerstationen, welche sich wie die Teilnehmerstation MS in Figur 1 in der Nähe der Grenze zwischen verschiedenen Funkzellen befinden.
- Es kann eine fundierte Entscheidung über einen Handover der Teilnehmerstation MS von der netzseitigen Funkstation NodeB 1 zu der netzseitigen Funkstation NodeB 2 erfolgen. Stellt die netzseitige Funkstation NodeB 1 fest, dass in einem oder mehreren Frequenzbereichen die Funkkanalqualität der Funkkanäle zwischen der Teilnehmerstation MS und der netzseitigen Funkstation NodeB 2 besser ist als diejenige der Funkkanäle zwischen der Teilnehmerstation MS und der netzseitigen Funkstation NodeB 1, so wäre es vorteilhaft, wenn die Teilnehmerstation MS die aktuell mit der netzseitigen Funkstation NodeB 1 geführte Kommunikation mit der netzseitigen Funkstation NodeB 2 als Funkkommunikationspartner fortführen würde. Wie auch in Bezug auf das Scheduling erläutert ist dieses Vorgehen insbesondere relevant für Teilnehmerstationen, welche sich wie die Teilnehmerstation MS in Figur 1 in der Nähe der Grenze zwischen verschiedenen Funkzellen befinden und somit potentielle Handover-Kandidaten darstellen.
   In die Entscheidung darüber, ob ein Handover zu der netzseitigen Funkstation NodeB 2 durchzuführen ist, kann zusätzlich oder alternativ zum Kriterium der Kanalqualität auch dasjenige der Auslastung der netzseitigen Funkstation NodeB 2 einbezogen werden. Hierzu können die gegebenenfalls in der Antwortnachricht REP TX enthaltenen expliziten Informationen über die Auslastung der netzseitigen Funkstation NodeB 2 herangezogen werden. Teilt die netzseitige Funkstation NodeB 2 mit der Antwortnachricht REP TX beispielsweise mit, dass sie stark ausgelastet ist, so kann davon ausgegangen werden, dass ein Handovergesuch durch die netzseitigen Funkstation NodeB 2 abgelehnt würde. Alternativ oder zusätzlich kann die netzseitige Funkstation NodeB 1 dem Sendeleistungsspektrum der netzseitigen Funkstation NodeB 2 entnehmen, ob ein Handover zu der netzseitigen Funkstation NodeB 2 sinnvoll wäre. Ist dem Sendeleistungsspektrum beispielsweise entnehmbar, dass unbenutzte Subbänder vorhanden sind, so könnte die netzseitige Funkstation NodeB 2 diese zur Kommunikation mit der Teilnehmerstation MS verwenden. Oder ergibt eine Integration des Sendeleistungsspektrums über die Frequenz eine niedrige Gesamtauslastung der netzseitigen Funkstation NodeB 2, so könnte zugunsten eines Handover zu der netzseitigen Funkstation NodeB 2 entschieden werden.

Die Teilnehmerstation MS wird mit der Nachricht HO/SCH über die von der netzseitigen Funkstation NodeB 1 getroffene Entscheidung informiert, z.B. indem ihr neue Funkressourcen zugewiesen werden, oder indem sie über einen anstehenden Handover zur netzseitigen Funkstation NodeB 2 informiert wird. Wurde von der netzseitigen Funkstation NodeB 1 zugunsten eines Handovers zu der netzseitigen Funkstation NodeB 2 entschieden, erfolgt eine in Figur 2 nicht dargestellte Abstimmung hierüber zwischen den netzseitigen Funkstationen NodeB 1 und NodeB 2.

Das beschriebene Verfahren kann in Bezug auf mehrere Teilnehmerstationen eingesetzt werden. Hierbei ist zu berücksichtigen, dass verschiedene Teilnehmerstationen ihre Antwortnachrichten REP MEAS auf verschiedenen Funkressourcen an die netzseitige Funkstation NodeB 1 senden müssen, so dass die Antwortnachrichten REP MEAS verschiedener Teilnehmerstationen nicht interferieren. Um den Funkressourcenbedarf in Aufwärtsrichtung für die Versendung der Messergebnisse durch die Teilnehmerstationen in Schranken zu halten, ist es sinnvoll, den Teilnehmerstationen nur wenige Subbänder vorzugeben, auf welchen sie Messungen der Pilotsignale durchführen sollen. Hingegen ist eine mehrmalige Versendung der Antwortnachricht REP TX der netzseitigen Funkstation NodeB 2 zum Zweck der Funkkanalermittlung für verschiedene Teilnehmerstationen nicht nötig, denn verschiedene Teilnehmerstationen können ihre Messungen an den gleichen Signalen PILOT durchführen.

## Patentansprüche

1. Verfahren zum Betreiben eines Funkkommunikationssystems, bei welchem
zur Kommunikation zwischen netzseitigen Funkstationen (NodeB 1, NodeB 2) und Teilnehmerstationen (MS) ein in eine Mehrzahl von Subbändern (SB) aufgeteiltes Frequenzband verwendet wird,
eine erste netzseitige Funkstation (NodeB 1) von einer zweiten netzseitigen Funkstation (NodeB 2) erste Informationen (REP TX) empfängt betreffend von der zweiten netzseitigen Funkstation (NodeB 2) für zumindest manche der Subbänder (SB) verwendete Sendeleistungen (I1),
die erste netzseitige Funkstation (NodeB 1) von einer Teilnehmerstation (MS) zweite Informationen (REP MEAS) empfängt betreffend eine Empfangsstärke (I2) der Teilnehmerstation (MS) von zumindest einem von der zweiten netzseitigen Funkstation (NodeB 2) auf einem Subband (SB) ausgestrahlten Signal (PILOT).

2. Verfahren nach Anspruch 1, bei dem
die erste netzseitige Funkstation (NodeB 1) die ersten Informationen (REP TX) von der zweiten netzseitige Funkstation (NodeB 2) und/oder die zweiten Informationen (REP MEAS) von der Teilnehmerstation (MS) anfordert.

3. Verfahren nach Anspruch 1 oder 2, bei dem
sich die ersten Informationen (REP TX) und die zweiten Informationen (REP MEAS) zumindest teilweise auf die gleichen Subbänder (SB) beziehen.

4. Verfahren nach einem der Ansprüche 1 bis 3, bei dem
die ersten Informationen (REP TX) weiterhin eine Auslastung der zweiten netzseitigen Funkstation (NodeB 2) betreffen.

5. Verfahren nach einem der Ansprüche 1 bis 4, bei dem
die ersten Informationen (REP TX) weiterhin von der zweiten netzseitigen Funkstation (NodeB 2) zur Ausstrahlung des mindestens einen Signals (PILOT) verwendete Funkressourcen betreffen.

6. Verfahren nach einem der Ansprüche 1 bis 5, bei dem
die erste netzseitige Funkstation (NodeB 1) aus den ersten Informationen (REP TX) und den zweiten Informationen (REP MEAS) eine Funkkanalqualität von zumindest einem Funkkanal zwischen der Teilnehmerstation (MS) und der zweiten netzseitigen Funkstation (NodeB 2) bestimmt.

7. Verfahren nach Anspruch 6, bei dem
sich die Funkkanalqualität auf das zumindest eine Subband (SB) bezieht, auf welches sich die Empfangsstärke (I2) der zweiten Informationen (REP MEAS) bezieht.

8. Verfahren nach Anspruch 6 oder 7, bei dem
sich die Funkkanalqualität auf zumindest ein Subband (SB) bezieht, auf welches sich die Empfangsstärke (I2) der zweiten Informationen (REP MEAS) nicht bezieht.

9. Verfahren nach einem der Ansprüche 1 bis 8, bei dem
die erste netzseitige Funkstation (NodeB 1) die ersten Informationen (REP TX) und die zweiten Informationen (REP MEAS) bei einer Entscheidung betreffend eine Funkressourcenzuweisung an die Teilnehmerstation (MS) berücksichtigt.

10. Verfahren nach einem der Ansprüche 1 bis 9, bei dem
die erste netzseitige Funkstation (NodeB 1) die ersten Informationen (REP TX) und die zweiten Informationen (REP MEAS) bei einer Entscheidung betreffend ein Handover der Teilnehmerstation (MS) von der ersten netzseitigen Funkstation (NodeB 1) zu der zweiten netzseitigen Funkstation (NodeB 2) berücksichtigt.

11. Verfahren nach einem der Ansprüche 1 bis 10, bei dem
sich die ersten Informationen (REP TX) und/oder die zweiten Informationen (REP MEAS) auf eine Mehrzahl von Zeitpunkten beziehen.

12. Verfahren nach einem der Ansprüche 1 bis 11, bei dem
die ersten Informationen (REP TX) und/oder die zweiten Informationen (REP MEAS) unter Verwendung eines Bildkompressionsverfahrens bearbeitet sind.

13. Verfahren nach einem der Ansprüche 1 bis 11, bei dem
die ersten Informationen (REP TX) und/oder die zweiten Informationen (REP MEAS) unter Verwendung eines Kompressionsverfahrens bearbeitet sind, bei welchem Stützstellen und zumindest eine einen Kurvenverlauf zwischen den Stützstellen beschreibende Größe eingesetzt werden.

14. Netzseitige Funkstation (NodeB 1) mit
Mitteln zum Kommunizieren mit Teilnehmerstationen (MS) unter Verwendung eines in eine Mehrzahl von Subbändern (SB) aufgeteilten Frequenzbandes,
Mitteln zum Empfangen und Verarbeiten von ersten Informationen (REP TX) von einer anderen netzseitigen Funkstation (NodeB 2) betreffend von der anderen netzseitigen Funkstation (NodeB 2) für zumindest manche der Subbänder (SB) verwendete Sendeleistungen (I1),
Mitteln zum Empfangen und Verarbeiten von zweiten Informationen (REP MEAS) von einer Teilnehmerstation (MS) betreffend eine Empfangsstärke (I2) der Teilnehmerstation (MS) von zumindest einem von der anderen netzseitigen Funkstation (NodeB 2) auf einem Subband (SB) ausgestrahlten Signal (PILOT).

## Claims

1. Method for operating a radio communication system in which a frequency band split into a plurality of sub-bands (SB) is used for communication between network radio stations (nodeB 1, nodeB 2) and subscriber stations (MS),
a first network radio station (nodeB 1) receives from a second network radio station (nodeB 2) first information (REP TX) relating to transmission powers (I1) used by the second network radio station (nodeB 2) for at least some of the sub-bands (SB),
the first network radio station (nodeB 1) receives from a subscriber station (MS) second information (REP MEAS) relating to a reception level (I2) of the subscriber station (MS) of at least one signal (PILOT) radiated by the second network radio station (nodeB 2) on a sub-band (SB).

2. Method according to Claim 1, in which
the first network radio station (nodeB 1) requests the first information (REP TX) from the second network radio station (nodeB 2) and/or the second information (REP MEAS) from the subscriber station (MS).

3. Method according to Claim 1 or 2, in which
the first information (REP TX) and the second information (REP MEAS) relate at least partially to the same sub-bands (SB).

4. Method according to one of Claims 1 to 3, in which the first information (REP TX) also relates to a capacity utilization of the second network radio station (nodeB 2).

5. Method according to one of Claims 1 to 4, in which the first information (REP TX) also relates to radio resources used by the second network radio station (nodeB 2) for radiating the at least one signal (PILOT).

6. Method according to one of Claims 1 to 5, in which the first network radio station (nodeB 1) determines from the first information (REP TX) and the second information (REP MEAS) a radio channel quality of at least one radio channel between the subscriber station (MS) and the second network radio station (nodeB 2).

7. Method according to Claim 6, in which
the radio channel quality relates to the at least one sub-band (SB) to which the reception level (I2) of the second information (REP MEAS) is related.

8. Method according to Claim 6 or 7, in which
the radio channel quality relates to at least one sub-band (SB) to which the reception level (I2) of the second information (REP MEAS) is not related.

9. Method according to one of Claims 1 to 8, in which the first network radio station (nodeB 1) takes into consideration the first information (REP TX) and the second information (REP MEAS) in a decision with respect to the assignment of a radio resource to the subscriber station (MS).

10. Method according to one of Claims 1 to 9, in which the first network radio station (nodeB 1) takes into consideration the first information (REP TX) and the second information (REP MEAS) in a decision with respect to a handover of the subscriber station (MS) from the first network radio station (nodeB 1) to the second network radio station (nodeB 2).

11. Method according to one of Claims 1 to 10, in which the first information (REP TX) and/or the second information (REP MEAS) relate to a plurality of times.

12. Method according to one of Claims 1 to 11, in which the first information (REP TX) and/or the second information (REP MEAS) are/is processed by using an image compression method.

13. Method according to one of Claims 1 to 11, in which the first information (REP TX) and/or the second information (REP MEAS) are processed by using a compression method in which interpolation points and at least one quantity describing a curve shape between the interpolation points are used.

14. Network radio station (nodeB 1) having
means for communicating with subscriber stations (MS) by using a frequency band split into a plurality of sub-bands (SB), means for receiving and processing first information (REP TX) from another network radio station (nodeB 2) relating to transmission powers (I1) used by the other network radio station (nodeB 2) for at least some of the sub-bands (SB), means for receiving and processing second information (REP MEAS) from a subscriber station (MS) relating to a reception level (I2) of the subscriber station (MS) of at least one signal (PILOT) radiated by the other network radio station (nodeB 2) on a sub-band (SB).

## Revendications

1. Procédé pour exploiter un système de radiocommunication, dans lequel :
- une bande de fréquence répartie en une pluralité de sous-bandes (SB) est utilisée pour la communication entre des stations radio côté réseau (NodeB 1, NodeB 2) et des stations d'abonnés (MS) ;
- une première station radio côté réseau (NodeB 1) reçoit d'une deuxième station radio côté réseau (NodeB 2) des premières informations (REP TX) concernant des puissances d'émission (I1) utilisées par la deuxième station radio côté réseau (NodeB 2) pour au moins certaines des sous-bandes (SB) ;
- la première station radio côté réseau (NodeB 1) reçoit d'une station d'abonné (MS) des deuxièmes informations (REP MEAS) concernant une intensité (I2) avec laquelle la station d'abonné (MS) reçoit au moins un signal (PILOT) émis sur une sous-bande (SB) par la deuxième station radio côté réseau (NodeB 2).

2. Procédé selon la revendication 1, selon lequel la première station radio côté réseau (NodeB 1) demande les premières informations (REP TX) à la deuxième station radio côté réseau (NodeB 2) et/ou les deuxièmes informations (REP MEAS) à la station d'abonné (MS).

3. Procédé selon la revendication 1 ou 2, selon lequel les premières informations (REP TX) et les deuxièmes informations (REP MEAS) se réfèrent au moins en partie aux mêmes sous-bandes (SB).

4. Procédé selon l'une des revendications 1 à 3, selon lequel les premières informations (REP TX) concernent en outre un taux d'utilisation de la deuxième station radio côté réseau (NodeB 2).

5. Procédé selon l'une des revendications 1 à 4, selon lequel les premières informations (REP TX) concernent en outre des ressources radio utilisées par la deuxième station radio côté réseau (NodeB 2) pour émettre l'au moins un signal (PILOT).

6. Procédé selon l'une des revendications 1 à 5, selon lequel la première station radio côté réseau (NodeB 1) définit, à partir des premières informations (REP TX) et des deuxièmes informations (REP MEAS), une qualité de canal radio d'au moins un canal radio entre la station d'abonné (MS) et la deuxième station radio côté réseau (NodeB 2).

7. Procédé selon la revendication 6, selon lequel la qualité de canal radio se réfère à l'au moins une sous-bande (SB) à laquelle l'intensité de réception (I2) des deuxièmes informations (REP MEAS) se réfère.

8. Procédé selon la revendication 6 ou 7, selon lequel la qualité de canal radio se réfère à au moins une sous-bande (SB) à laquelle l'intensité de réception (I2) des deuxièmes informations (REP MEAS) ne se réfère pas.

9. Procédé selon l'une des revendications 1 à 8, selon lequel la première station radio côté réseau (NodeB 1) tient compte des premières informations (REP TX) et des deuxièmes informations (REP MEAS) lors d'une décision concernant une allocation de ressources radio à la station d'abonné (MS).

10. Procédé selon l'une des revendications 1 à 9, selon lequel la première station radio côté réseau (NodeB 1) tient compte des premières informations (REP TX) et des deuxièmes informations (REP MEAS) lors d'une décision concernant un transfert de la station d'abonné (MS) de la première station radio côté réseau (NodeB 1) vers la deuxième station radio côté réseau (NodeB 2).

11. Procédé selon l'une des revendications 1 à 10, selon lequel les premières informations (REP TX) et/ou les deuxièmes informations (REP MEAS) se réfèrent à une pluralité d'instants.

12. Procédé selon l'une des revendications 1 à 11, selon lequel les premières informations (REP TX) et/ou les deuxièmes informations (REP MEAS) sont traitées avec utilisation d'un procédé de compression d'images.

13. Procédé selon l'une des revendications 1 à 11, selon lequel les premières informations (REP TX) et/ou les deuxièmes informations (REP MEAS) sont traitées avec utilisation d'un procédé de compression d'images selon lequel sont utilisés des points d'appui et au moins une grandeur qui décrit un tracé de courbe entre les points d'appui.

14. Station radio côté réseau (NodeB 1), comportant :
- des moyens pour communiquer avec des stations d'abonnés (MS) en utilisant une bande de fréquence répartie en une pluralité de sous-bandes (SB) ;
- des moyens pour recevoir et traiter des premières informations (REP TX) d'une autre station radio côté réseau (NodeB 2) concernant des puissances d'émission (I1) utilisées par l'autre station radio côté réseau (NodeB 2) pour au moins certaines des sous-bandes (SB) ;
- des moyens pour recevoir et traiter des deuxièmes informations (REP MEAS) d'une station d'abonné (MS) concernant une intensité (I2) avec laquelle la station d'abonné (MS) reçoit au moins un signal (PILOT) émis sur une sous-bande (SB) par l'autre station radio côté réseau (NodeB 2).
